# EUROPÄISCHE PATENTSCHRIFT

(11) **EP 1 892 057 B1**
(45) Veröffentlichungstag und Bekanntmachung des Hinweises auf die Patenterteilung: **14.07.2010**
(21) Anmeldenummer: 07016040.3
(22) Anmeldetag: 16.08.2007
(51) Int. Cl.: B23Q 17/22

(54) **Verfahren zur Werkzeugvermessung mit einem Messgerät sowie Messvorrichtung mit einem Messgerät zur Werkzeugvermessung**
Method for measuring tools with a measuring device and measuring device with a measuring unit for measuring tools
Procédé de mesure d'outil à l'aide d'un appareil de mesure et dispositif de mesure doté d'un appareil de mesure pour la mesure d'outil

(30) Priorität: 22.08.2006 DE 102006039258
(43) Veröffentlichungstag der Anmeldung: 27.02.2008
(73) Patentinhaber: m & h inprocess messtechnik GmbH, 88289 Waldburg (DE)
(72) Erfinder: Madlener, Wolfgang, 88212 Ravensburg (DE); Veil, Wilfried, 88211 Ravensburg (DE)
(74) Vertreter: Eisele, Otten, Roth & Dobler

(56) Entgegenhaltungen:
- WO-A-2005/085753
- DE-A1- 10 239 694
- DE-A1- 19 528 376
- US-A- 4 581 808

## Beschreibung

Die Erfindung betrifft ein Verfahren zur Werkzeugvermessung an einer Werkzeugmaschine mit einem Messgerät sowie eine Messvorrichtung mit einem Messgerät zur Werkzeugvermessung.

### Stand der Technik

Sowohl einleitend bezeichnete Verfahren als auch Messvorrichtungen sind bereits in verschiedenen Ausführungsformen aus dem Stand der Technik bekannt, z. B. aus der US 4,581,808.

Bei einer weiteren Ausführungsform wird ein Werkzeugmessgerät auf einem Tisch einer Werkzeugmaschine in einer Position befestigt, in welcher in einer Spindel der Werkzeugmaschine angeordnete Werkzeuge für dessen Vermessung das Messgerät erreichen können.

Vor einer Vermessung wird das Werkzeugmessgerät kalibriert. Hierzu wird ein Kalibrierwerkzeug, dessen Geometrie bekannt ist, verwendet. Das Kalibrierwerkzeug fährt rotierend oder stehend auf einen Sensor des Werkzeugmessgeräts zu, bis dieser ein Signal an eine Werkzeugmaschinensteuerung abgibt. Dieses Signal wird von einer Werkzeugmaschinensteuerung verwendet, die Achsposition zu speichern.

Zu vermessende Werkzeuge werden auf die gleiche Art, wie das Kalibrierwerkzeug auf das Werkzeugmessgerät zubewegt. Aus dem Unterschied der Achswerte zu den Achswerten der Kalibrierung kann die Berechnung der Werkzeuggeometrie erfolgen. Für eine Signalübertragung vom Werkzeugmessgerät zu der Werkzeugmaschinensteuerung gibt es verschiedene Möglichkeiten. Beispielsweise ist die Signalübertragung mit einem Kabel realisiert. Ebenso bekannt ist die Übermittlung von codierten Infrarotlichtsignalen an eine Empfangseinheit, welche durch ein Kabel mit der Werkzeugmaschinensteuerung verbunden ist. Anstatt von codierten Infrarotlichtsignalen können auch codierte Funksignale zur Anwendung kommen.

Die beschriebene Vorgehensweise hat eine Reihe von Nachteilen. Das Werkzeugmessgerät steht an einem festen Ort an der Werkzeugmaschine. Sofern es sich um den Maschinentisch handelt, was sich normalerweise anbietet, wird dadurch die Aufspannfläche für das Werkstück eingeschränkt.

Insbesondere auf einem Maschinentisch angebrachte Werkzeügmessgeräte sind kollisionsgefährdet. Jede Kollision kann Beschädigungen zur Folge haben.

Außerdem ist ein Werkzeugmessgerät auf einem Maschinentisch Verschmutzungen durch eine Werkstückbearbeitung, die auf dem Maschinentisch abläuft, ausgesetzt.

### Aufgabe und Vorteile der Erfindung

Der Erfindung liegt die Aufgabe zugrunde, ein Messverfahren sowie eine Messvorrichtung der einleitend bezeichneten Art bereitzustellen, mit welchem die aufgezeigten Nachteile reduzierbar oder ganz vermeidbar sind.

Diese Aufgabe wird durch die Merkmale des Anspruchs 1 bzw. 9 gelöst. In den abhängigen Ansprüchen sind vorteilhafte und zweckmäßige Weiterbildungen der Erfindung angegeben.

Die Erfindung geht zunächst von einem Verfahren zur Werkzeugvermessung an einer Werkzeugmaschine mit einem Messgerät aus. Ein erster wesentlicher Aspekt der Erfindung liegt nun darin, dass das Messgerät von einer Spindel der Werkzeugmaschine aufgenommen und durch eine Bewegung der Spindel an einem Messort an der Werkzeugmaschine für die Durchführung einer oder mehrerer Messungen zeitweise platziert wird, der sich von einer Spindelaufnahme unterscheidet. Durch diese Vorgehensweise befindet sich ein Messgerät im besten Falle nur solange, z.B. auf einem Werkzeugtisch, wie es für die Durchführung von Messungen benötigt wird. In der übrigen Zeit kann der Platz, insbesondere auf einem Maschinentisch, dann ohne Einschränkungen für Bearbeitungsvorgänge genutzt werden. Wesentlich dabei ist, dass die Bewegung des Messgeräts durch die Spindelbewegungen erfolgt, so dass keine weiteren zusätzlichen mechanische Positioniereinheiten erforderlich sind.

Vorzugsweise wird nach Abschluss der Messung bzw. der Messungen das Messgerät vom Messort an der Werkzeugmaschine wieder entfernt. Dadurch kann das Messgerät sicher vor Verschmutzung und Beschädigung durch Bearbeitungsvorgänge geschützt werden.

Allerdings ist es nicht zwingend erforderlich nach Beendigung von Messungen das Messgerät zu entfernen. Es bringt bereits Vorteile, wenn das Messgerät nach bestimmten Bearbeitungszyklen entfernt wird, beispielsweise vor dem Einrichten eines neuen Werkstücks. Wenn Feinbearbeitungsprozesse an einem Werkstück stattfinden, z.B. eine Oberfläche geschlichtet wird, kann es gerade vorteilhaft sein, dass während des Feinbearbeitungsprozesses ein Messgerät zur Verfügung steht, um kontinuierlich Werkzeugvermessungen durchführen zu können. Nur auf diese Weise lassen sich Bearbeitungsflächen mit vergleichsweise höchster Qualität erzeugen. Während derartiger Bearbeitungsprozesse ist ein Messgerät zudem weniger Verschmutzungen ausgesetzt, als bei einer Grobbearbeitung.

Im Weiteren ist es bevorzugt, wenn nach Beendigung einer Messung das Messgerät vom Messort zu einer Parkstation bewegt wird. Die Parkstation kann ein herkömmliches Werkzeugmagazin sein. Eine Ablage des Messgeräts kann aber auch in einer Dockingstation mit z.B. einer Energieversorgung erfolgen, die zur Ladung von Akkumulatoren im Messgerät ausgelegt ist.

In einer weiteren besonders bevorzugten Ausgestaltung der Erfindung wird das Messgerät zusammen mit einem Kalibriernormal für eine Platzierung an einem Messort aufgenommen. Die Aufnahme kann z.B. von einem Werkzeugmagazin aus erfolgen, das für die Spindel erreichbar ist.

Nach der Platzierung des Messgeräts an einem Messort wird vorteilhafterweise das Kalibriernormal vom Messgerät getrennt.

Damit ist es möglich, mit dem Kalibriernormal, das vorzugsweise an der Werkzeugspindel verbleibt, eine Kalibrierung des Messgeräts am Messort vor der Durchführung einer Messung, durchzuführen.

Überdies bevorzugt ist es, wenn nach Durchführung der Kalibrierung das Kalibriernormal in eine Parkstellung gebracht wird. Nach Ablage des Kalibriernormals kann mit der Werkzeugspindel ein Werkzeug aufgenommen werden, das sich dann mit dem kalibrierten Messgerät vermessen lässt. Z.B. wird die Werkzeuglänge bestimmt.

In einer überdies bevorzugten Ausgestaltung der Erfindung wird vor der Entfernung des Messgeräts das Messgerät mit dem Kalibriernormal verbunden. Sowohl das Kalibriernormal als auch das Messgerät kann dann zusammen in eine Parkposition, Dockingstation oder dergleichen gebracht werden.

Im Weiteren geht die Erfindung von einer Messvorrichtung mit einem Messgerät zur Werkzeugvermessung aus, bei der wesentliche Aspekt darin liegt, dass die Messvorrichtung so ausgebildet ist, dass das Messgerät von einer Spindel einer Werkzeugmaschine aufgenommen werden kann und über eine Spindelbewegung der Werkzeugmaschine an einem Messort an der Werkzeugmaschine für einen Messvorgang platzierbar ist, der sich von einer Spindelaufnahme unterscheidet. Damit ist es möglich, das Messgerät lediglich zeitweise an einem Messort unter Nutzung von bereits bestehenden Positioniermöglichkeiten anzuordnen.

Das Messgerät kann als berührendes Messgerät ausgebildet sein. Z. B. umfasst es einen Messtaster. Ebenso denkbar ist ein berührungsloses Messgerät auf der Grundlage eines optischen Systems. Dazu kann ein Lasersystem oder ein System zur Anwendung kommen, das auf einen Video- bzw. CCD-Chip zurückgreift.

Um eine effektive Kalibrierung eines "soeben" platzierten Messgeräts an einer Werkzeugmaschine vornehmen zu können, wird überdies vorgeschlagen; dass ein Kalibriernormal vorgesehen ist, das mit dem Messgerät in einer lösbaren Verbindung steht.

Nach Platzierung des Messgeräts an einer Werkzeugmaschine wird vorzugsweise das Kalibriernormal vom Messgerät getrennt. Hierzu ist es vorteilhaft, wenn am Messgerät und/oder Kalibriernormal ein Freigabemechanismus vorgesehen ist, der sich beispielsweise von der Maschinensteuerung auslösen lässt.

In einer überdies bevorzugten Ausgestaltung der Erfindung ist das Messgerät für einen Platziervorgang an einer Werkzeugmaschine zumindest teilweise in einem Kalibriernormal angeordnet. Dazu kann das Kalibriernormal als zumindest teilweise hohler Zylinder ausgebildet sein, der das Messgerät umschießt.

Vorzugsweise sind Mittel vorgesehen, um das Kalibriernormal wieder mit dem Messgerät verbinden zu können.

Für eine Anbringung des Messgeräts an einer Werkzeugmaschine ist es überdies von Vorteil, wenn das Messgerät eine Adaptereinrichtung besitzt. Beispielsweise ist ein Bolzen für eine Schnappeinrichtung vorgesehen, die an einem Werkzeugtisch montiert ist und in welche sich das Messgerät mittels des Bolzens einklicken lässt. Denkbar ist aber auch ein einfacher Magnetfuß oder lediglich eine Standfläche für das Aufstellen des Messgeräts auf einer entsprechenden Fläche, z.B. einem Maschinentisch an einer Werkzeugmaschine. Denn bereits das Eigengewicht des Messgeräts kann ausreichen, um ohne weitere Fixierung zuverlässig Messungen vornehmen zu können.

Für das Unterbringen des Messgeräts, insbesondere zusammen mit dem Kalibriernormal in einer Parkposition ist es vorteilhaft, wenn die Messvorrichtung zur Unterbringung in einem herkömmlichen Werkzeugmagazin ausgelegt ist.

Dazu sollte die Messvorrichtung entsprechende Adaptereinrichtungen für eine Werkzeugspindel aufweisen. Diese sind vorzugsweise am Kalibriernormal ausgebildet. Die Messvorrichtung besitzt vorzugsweise eine Werkzeugaufnahme, z. B. Kegelaufnahme für eine Werkzeugspindel.

Um Messungen durchzuführen, ist es nicht erforderlich, dass das Messgerät, das regelmäßig kabellos mit Hilfe von Akkumulatoren arbeitet, ständig in Betrieb ist. In diesem Zusammenhang ist es bevorzugt, wenn das Messgerät so ausgebildet ist, dass durch das Trennen vom Kalibriernormal dessen Aktivierung stattfindet. Die Aktivierung kann auch durch den Platziervorgang an der Werkzeugmaschine stattfinden.

Denkbar ist auch eine Aktivierung des Messgeräts erst durch ein Antasten mit einem Kalibriernormal.

Eine Aktivierung und/oder Deaktivierung kann auch über Infrarot- oder Funksignale erfolgen.

### Zeichnungen

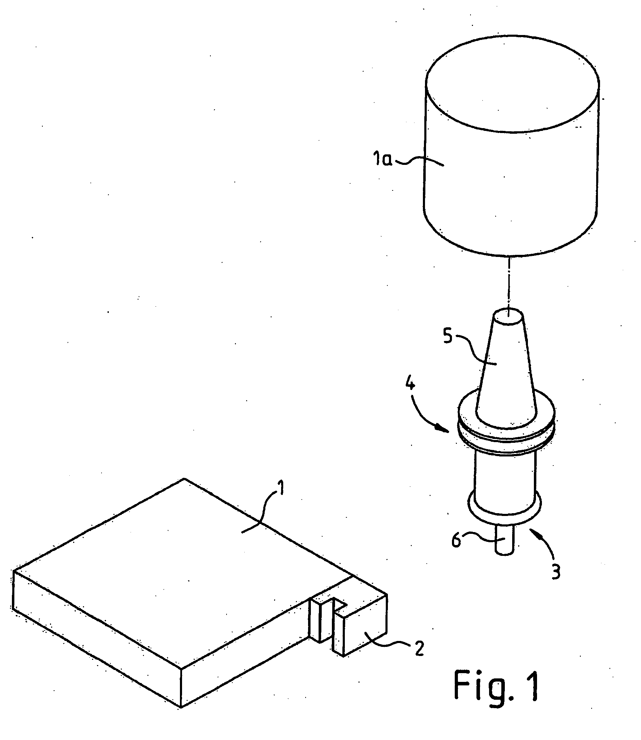

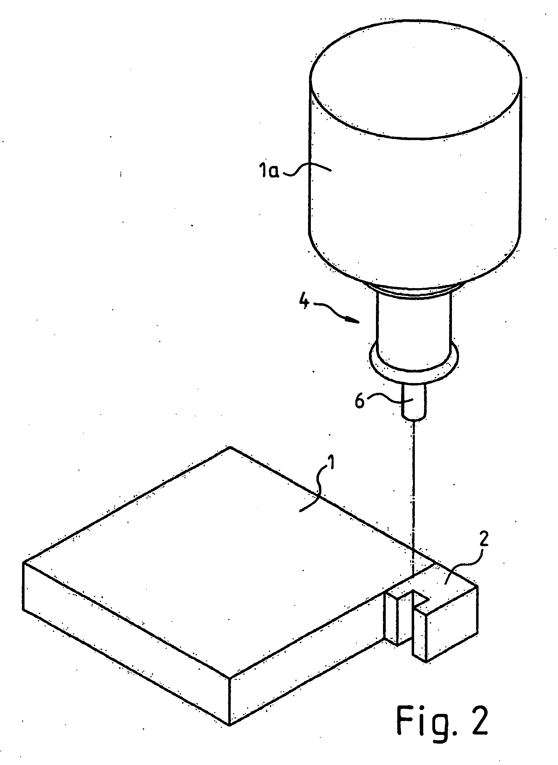

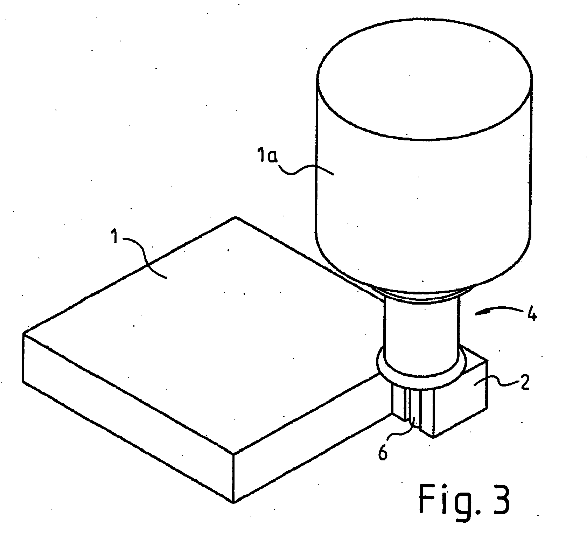

Ein Ausführungsbeispiel der Erfindung ist in den Zeichnungen dargestellt und wird unter Angabe weiterer Vorteile und Einzelheiten nachstehend näher erläutert. Es zeigen
- Figuren 1 bis 6: in jeweils perspektivischen Darstellungen Momentaufnahmen zu einer Positionierung eines Messgeräts als Teil einer Messvorrichtung und Momentaufnahmen zu einem Kalibrier- und Messvorgang.

### Beschreibung des Ausführungsbeispiels

In Figur 1 ist ein Maschinentisch 1 einer Werkzeugmaschine mit Spindelaufnahme 1a (im Übrigen nicht dargestellt) abgebildet. Der Maschinentisch 1 besitzt eine Einschnappvörrichtüng 2 für ein Messgerät 3 (siehe insbesondere Figur 1d).

Das Messgerät 3 ist teil einer Messvorrichtung 4 mit einem Kegelschaft 5, über welchen die Messvorrichtung 4 von der Spindelaufnahme 1a der Werkzeugmaschine aufgenommen und bewegt werden kann.

In Figur 1a ist der Zustand dargestellt, in welchem die Spindelaufnahme 1a die Messvorrichtung 4 über den Kegelschaft 5 im Begriff ist aufzunehmen und über die Verfahr- bzw. Positioniermöglichkeiten der Werkzeugmaschine die Messvorrichtung 4 zur Einschnappvorrichtung 2 zu bewegen. Ein etwas fortgeschrittener Zustand ist in Figur 2 zu sehen.

In Figur 3 wurde die Messvorrichtung 4 mittels eines Zapfenelements 6 in die Einschnappvorrichtung 2 eingeklickt.

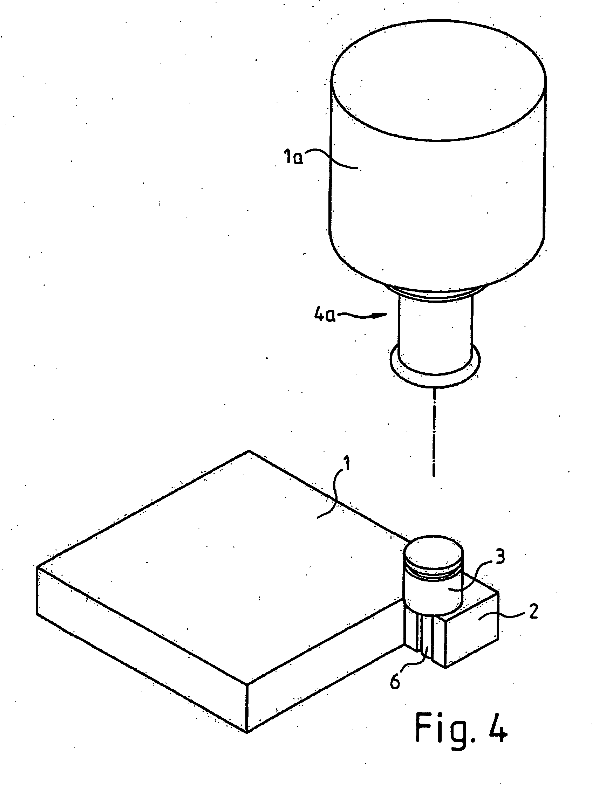

Nun wird das Messgerät 3 von der übrigen Messvorrichtung 4 getrennt, so dass das Messgerät 3 in der Einschnappvorrichtung 2 verbleibt. Das Zapfenelement 6 ist dementsprechend am Messgerät 3 angeordnet (siehe Figur 4).

Die Trennung kann über einen Freigabemechanismus, durch eine Maschinensteuerung ausgelöst, erfolgen.

Vorteilhafterweise umfasst die verbleibende Messvorrichtung 4a einen Kalibrierkörper 7, der sich wie zuvor die komplette Messvorrichtung 4 über die Spindel der Werkzeugmaschine bewegen lässt.

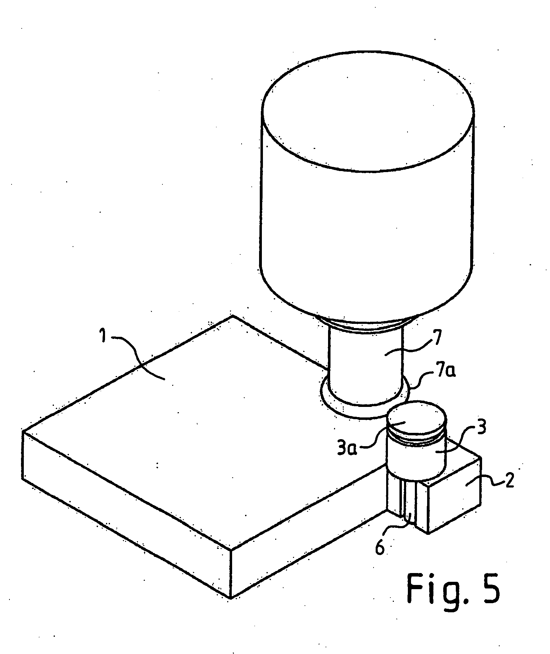

Im vorliegenden Fall ist der Kalibrierkörper 7 als Hohlzylinder ausgebildet, mit einem Kalibrierwulst 7a (siehe Figur 5).

Vorzugsweise ist die Geometrie des Kalibrierkörpers 7 sowie die Lage des Kalibrierkörpers 7 in Bezug auf eine Positioniereinrichtung für die Werkzeugspindel 1a bekannt.

Damit kann durch eine Antastung an einen Tastkopf 3a des Messgeräts 3 mit dem Kalibrierkörper 7 in eine Richtung parallel zur Drehachse der Spindel eine Längenkalibrierung vorgenommen werden (siehe Figur 5).

Sobald der Kalibrierkörper ein Schaltsignal am Tastkopf 3a auslöst, hält die Maschinensteuerung den entsprechenden Koordinatenwert in Achsrichtung fest. Auf der Grundlage des festgestellten Wertes und aus dem Wissen über die Geometrie und Position des Kalibrierkörpers in Bezug zur Spindel lässt sich dann an einem Werkzeug eine Längenposition bestimmen.

Eine entsprechende Kalibrierung lässt sich für eine spätere. Bestimmung eines Radius eines Werkzeugs vornehmen, indem mit dem Kalibrierwulst 7a des Kalibrierkörpers 7 der Tastkopf 3a in einer Richtung senkrecht zur Drehachse der Spindel angefahren wird. Aus dem in diese Richtung erfassten Koordinatenwert und dem Durchmesser des Kalibrierkörpers kann in einem nachfolgenden Messlauf der Durchmesser eines Werkzeugs bestimmt werden.

Der Vorteil der vorliegenden Ausführungsform besteht insbesondere in der hohlzylindrischen Ausführung des Kalibrierkörpers 7, der sich über das Messgerät 3 stülpen lässt, um dieses aufzunehmen und zu bewegen. Dadurch wird nicht nur eine sehr kompakte Form geschaffen, wenn Kalibrierkörper und Messgerät nicht voneinander getrennt sind, sondern auch ein Schutz für das Messgerät bereitgestellt, das innerhalb des Kalibrierkörpers sicher aufgenommen ist.

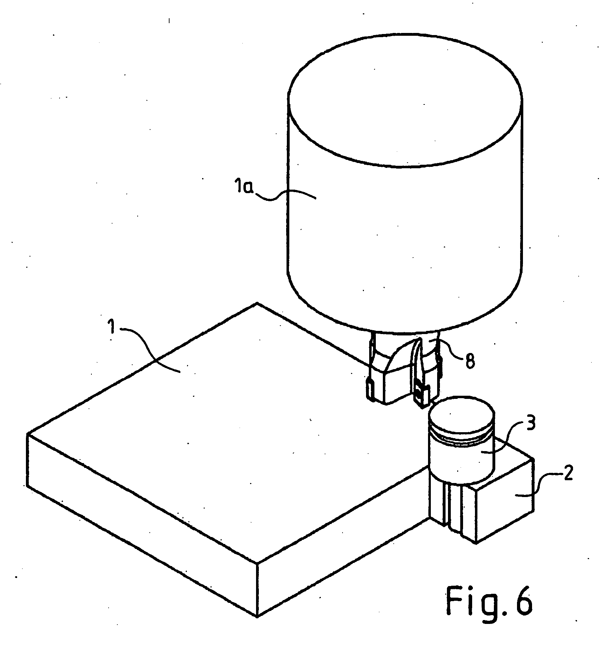

Nach erfolgreichem Kalibriervorgang kann ein gewünschtes Werkzeug 8, das in der Spindel 1a der Werkzeugmaschine aufgenommen ist, z.B. im Hinblick auf eine Längenposition und dessen Durchmesser vermessen werden (siehe Figur 6).

Nach diesem Vorgang kann das Messgerät vor dem Start einer Werkstückbearbeitung wieder entfernt werden, durch Aufnahme mit dem Kalibrierkörper und Unterbringung in einer Parkstellung, z.B. einer geeigneten Dockingstation (nicht dargestellt).

Dazu wird vorzugsweise das vermessene Werkzeug wieder im Werkzeugmagazin zwischengelagert, um es dann nach durchgeführter Messung für einen Bearbeitungsvorgang wieder aufzunehmen.

Es ist jedoch auch denkbar, dass das Messgerät für einen bestimmten Bearbeitungszyklus im Bereich eines zu bearbeitenden Werkstücks verbleibt, um mehrfach eine Vermessung des Werkzeugs vornehmen zu können.

Erst in einem späteren Vorgang wird das Messgerät aus diesem Bereich entfernt.

Gegebenenfalls bleibt das Messgerät auch über viele Bearbeitungsvorgänge am Maschinentisch 1 positioniert.

Grundsätzlich kann durch die vorgeschlagene Vorgehensweise eine Kalibrierung in einem automatischen Ablauf erfolgen.

Darüber hinaus lässt sich eine Belegung einer Aufspannfläche an einer Werkzeugmaschine optimieren. Überdies kann die Verschmutzung oder die Gefahr einer Beschädigung eines Messgeräts minimiert werden, indem das Messgerät nur für die Vermessung von Werkzeugen am Werkzeugtisch angeordnet ist und dann wieder entfernt wird.

### Bezugszeichenliste

- 1: Maschinentisch
- 1a: Spindelaufnahme
- 2: Einschnappvorrichtung
- 3: Messgerät
- 3a: Tastkopf
- 4: Messvorrichtung
- 4a: Messvorrichtung ohne Messgerät
- 5: Kegelschaft
- 6: Zapfenelement
- 7: Kalibrierkörper
- 7a: Kalibrierwulst
- 8: Werkzeug

## Patentansprüche

1. Verfahren zur Werkzeugvermessung an einer Werkzeugmaschine mit einem Messgerät (3), **dadurch gekennzeichnet, dass** das Messgerät (3) von einer Spindel der Werkzeugmaschine aufgenommen und durch eine Bewegung der Spindel an einem Messort an der Werkzeugmaschine für die Durchführung einer oder mehrerer Messungen zeitweise angebracht wird, wobei sich der Messort von einer Spindelaufnahme unterscheidet.

2. Verfahren nach Anspruch 1, **dadurch gekennzeichnet, dass** nach Abschluss der Messung bzw. der Messungen das Messgerät vom Messort an der Werkzeugmaschine entfernt wird.

3. Verfahren nach Anspruch 1 oder 2, **dadurch gekennzeichnet, dass** nach Beendigung einer Messung das Messgerät (3) vom Messort zu einer Parkstation bewegt wird.

4. Verfahren nach einem der vorhergehenden Ansprüche, **dadurch gekennzeichnet, dass** das Messgerät (3) zusammen mit einem Kalibriernormal (7) für eine Platzierung an einem Messort aufgenommen wird.

5. Verfahren nach einem der vorhergehenden Ansprüche, **dadurch gekennzeichnet, dass** nach Platzierung des Messgeräts (3) an einem Messort das Messgerät (3) vom Kalibriernormal getrennt wird.

6. Verfahren nach einem der vorhergehenden Ansprüche, **dadurch gekennzeichnet, dass** nach Platzierung des Messgeräts (3) an einem Messort das Messgerät (3) kalibriert wird.

7. Verfahren nach einem der vorhergehenden Ansprüche, _{.}**dadurch gekennzeichnet, dass** nach der Kalibrierung das Kalibriernormal in eine Parkstellung gebracht wird.

8. Verfahren nach einem der vorhergehenden Ansprüche, **dadurch gekennzeichnet, dass** vor der Entfernung des Messgeräts (3) vom Messort das Messgerät (3) mit einem Kalibriernormal verbunden wird.

9. Messvorrichtung (4) mit einem Messgerät (3) zur Werkzeugvermessung, **dadurch gekennzeichnet, dass** die Messvorrichtung (4) eine Adaptervorrichtung (5) für eine Spindelaufnahme (1a) aufweist und derart ausgebildet ist, dass das Messgerät (3) von einer Spindel einer Werkzeugmaschine aufgenommen werden kann und über eine Spindelbewegung der Werkzeugmaschine an einem Messort an der Werkzeugmaschine (4) für einen Messvorgang angebracht werden kann, der sich von einer Spindelaufnahme unterscheidet und dass die Adaptervorrichtung vom Messgerät trennbar ist.

10. Messvorrichtung nach Anspruch 9, **dadurch gekennzeichnet; dass** das Messgerät (3) ein berührendes Messgerät umfasst.

11. Messvorrichtung nach Anspruch 9 oder 10, **dadurch gekennzeichnet, dass** das Messgerät (3) ein berührungsloses Messgeräts umfasst.

12. Messvorrichtung nach einem der vorhergehenden Ansprüche, **dadurch gekennzeichnet, dass** ein Kalibriernormal (7) vorgesehen ist, das mit dem Messgerät (3) in einer lösbaren Verbindung steht.

13. Messvorrichtung nach einem der vorhergehenden Ansprüche, **dadurch gekennzeichnet, dass** .das Messgerät (3) vom Kalibriernormal (4) trennbar ist, insbesondere nach dessen Platzierung am Messort an einer Werkzeugmaschine.

14. Messvorrichtung nach einem der vorhergehenden Ansprüche, **dadurch gekennzeichnet, dass** das Messgerät (3) für einen Platziervorgang an der Werkzeugmaschine zumindest teilweise in einem Kalibriernormal (4) angeordnet ist.

15. Messvorrichtung nach einem der vorhergehenden Ansprüche, **dadurch gekennzeichnet, dass** das Kalibriernormal (4) hohlzylindrisch ist.

16. Messvorrichtung nach einem der vorhergehenden Ansprüche, **dadurch gekennzeichnet, dass** das Messgerät (3) eine Adaptervorrichtung (6) für die Anbringung an einer Werkzeugmaschine besitzt.

17. Messvorrichtung nach einem der vorhergehenden Ansprüche, **dadurch** gekenntzeichnet, dass das Messgerät (3) eine Standfläche für die Anbringung auf einem Werkzeugtisch einer Werkzeugmaschine besitzt.

18. Messvorrichtung nach einem der vorhergehenden Ansprüche, **dadurch gekennzeichnet, dass** die Vorrichtung (4) zur Unterbringung in einem herkömmlichen Werkzeugmagazin ausgelegt ist.

19. Messvorrichtung nach einem der vorhergehenden Ansprüche, **dadurch gekennzeichnet, dass** die Vorrichtung (4) eine Werkzeugaufnahme für eine Werkzeugspindel besitzt.

20. Messvorrichtung nach einem der vorhergehenden Ansprüche, **dadurch gekennzeichnet, dass** das Messgerät (3) so ausgebildet ist, dass es durch das Trennen vom Kalibriernormal aktiviert wird.

21. Messvorrichtung nach einem der vorhergehenden Ansprüche, **dadurch gekennzeichnet, dass** das Messgerät (3) derart ausgelegt ist, dass es durch Platzieren an der Werkzeugmaschine aktiviert wird.

22. Messvorrichtung nach einem der vorhergehenden Ansprüche, **dadurch gekennzeichnet, dass** das Messgerät (3) durch Antasten mit einem Kalibriernormal in einen aktiven Zustand versetzbar ist.

23. Messvorrichtung nach einem der vorhergehenden Ansprüche, **dadurch gekennzeichnet, dass** das Messgerät (3) durch Infrarot- oder Funksignale aktivierbar und/oder deaktivierbar ist.

## Claims

1. Method for measuring tools on a machine tool with a measuring device (3), **characterised in that** the measuring device (3) is mounted by a spindle of the machine tool and by means of a movement of the spindle is temporarily positioned at a measuring point on the machine tool in order to carry out one or more measurements, whereby the measuring point differs from a spindle mount.

2. Method according to claim 1, **characterised in that** the measuring device is removed from the measuring point on the machine tool after the measurement or measurements has/have been completed.

3. Method according to claim 1 or 2, **characterised in that** the measuring device (3) is moved from the measuring point to a parking station after the measurement has been completed.

4. Method according to one of the preceding claims, **characterised in that** the measuring device (3) is mounted together with a calibration standard for positioning at a measuring point.

5. Method according to one of the preceding claims, **characterised in that** the measuring device (3) is removed from the calibration standard after the measuring device (3) has been positioned at a measuring point.

6. Method according to one of the preceding claims, **characterised in that** the measuring device (3) is calibrated after positioning the measuring device (3) at a measuring point.

7. Method according to one of the preceding claims, **characterised in that** after the calibration the calibration standard is moved into a parking position.

8. Method according to one of the preceding claims, **characterised in that** before the removal of the measuring device (3) from the measuring point the measuring device (3) is connected to a calibration standard.

9. Measuring apparatus (4) having a measuring device (3) for measuring tools, **characterised in that** the measuring apparatus (4) comprises an adapter device (5) for a spindle mount (1a) and is designed such that the measuring device (3) can be mounted by a spindle of a machine tool and can be attached via a spindle movement of the machine tool at a measurement point on the machine tool (4) for a measuring operation, said measuring point differing from the spindle mount, and **in that** the adapter device can be separated from the measuring device.

10. Measuring apparatus according to claim 9, **characterised in that** the measuring device (3) comprises a contact-forming measuring device.

11. Measuring apparatus according to claim 9 or 10, **characterised in that** the measuring device (3) comprises a contactless measuring device.

12. Measuring apparatus according to one of the preceding claims, **characterised in that** a calibration standard (7) is provided which is connected to the measuring device (3) in a detachable connection.

13. Measuring apparatus according to one of the preceding claims, **characterised in that** the measuring device (3) can be disconnected from the calibration standard (4), in particular after it has been positioned at the measuring point on a machine tool.

14. Measuring apparatus according to one of the preceding claims, **characterised in that** for a positioning process on the machine tool, the measuring device (3) is arranged at least partially in a calibration standard (4).

15. Measuring apparatus according to one of the preceding claims, **characterised in that** the calibration standard (4) is hollow cylindrical.

16. Measuring apparatus according to one of the preceding claims, **characterised in that** the measuring device (3) has an adaptor device (6) for attachment to a machine tool.

17. Measuring apparatus according to one of the preceding claims, **characterised in that** the measuring device (3) has a standing surface for placing it on a tool table of a machine tool.

18. Measuring apparatus according to one of the preceding claims, **characterised in that** the apparatus (4) is configured for accommodation in a conventional tool magazine.

19. Measuring apparatus according to one of the preceding claims, **characterised in that** the apparatus (4) has a tool mount for a tool spindle.

20. Measuring apparatus according to one of the preceding claims, **characterised in that** the measuring device (3) is designed in such a way that it is activated by disconnection from the calibration standard.

21. Measuring apparatus according to one of the preceding claims, **characterised in that** the measuring device (3) is configured in such a way that it is activated by positioning on the machine tool.

22. Measuring apparatus according to one of the preceding claims, **characterised in that** the measuring device (3) can be placed into an active state by sensing with a calibration standard.

23. Measuring apparatus according to one of the preceding claims, **characterised in that** the measuring device (3) can be activated and/or deactivated by means of infrared signals or radio signals.

## Revendications

1. Procédé de mesure d'un outil sur une machine-outil à l'aide d'un appareil de mesure (3),
**caractérisé en ce que**
l'appareil de mesure (3) est monté sur une broche de la machine-outil et un mouvement de la broche le conduit périodiquement à un endroit de mesure sur la machine-outil pour effectuer une ou plusieurs mesures, l'endroit de mesure étant différent d'un logement de broche.

2. Procédé selon la revendication 1,
**caractérisé en ce qu'**
à la fin de la ou des mesures, l'appareil de mesure est enlevé de l'endroit de la mesure sur la machine-outil.

3. Procédé selon la revendication 1 ou 2,
**caractérisé en ce qu'**
à la fin d'une mesure, l'appareil de mesure (3) est déplacé de l'endroit de la mesure à une position de rangement.

4. Procédé selon l'une des revendications précédentes,
**caractérisé en ce que**
l'appareil de mesure (3) avec un étalon de calibrage (7) est positionné à un emplacement de mesure.

5. Procédé selon l'une des revendications précédentes,
**caractérisé en ce qu'**
après le positionnement de l'appareil de mesure (3) à l'emplacement de mesure, on sépare l'appareil de mesure (3) de l'étalon de calibrage.

6. Procédé selon l'une des revendications précédentes,
**caractérisé en ce qu'**
après le positionnement de l'appareil de mesure (3) à un emplacement de mesure, on calibre l'appareil de mesure (3).

7. Procédé selon l'une des revendications précédentes,
**caractérisé en ce qu'**
après calibrage, on met l'étalon de calibrage dans une position de rangement.

8. Procédé selon l'une des revendications précédentes,
**caractérisé en ce qu'**
avant d'enlever l'appareil de mesure (3) de l'emplacement de mesure, on relie l'appareil de mesure (3) à un étalon de calibrage.

9. Dispositif de mesure (4) comportant un appareil de mesure (3) pour effectuer une mesure d'outil,
**caractérisé en ce que**
le dispositif de mesure (4) comporte un dispositif adaptateur (5) pour un logement de broche (la) et il est réalisé pour que :
l'appareil de mesure (3) puisse être reçu par une broche d'une machine-outil et puisse être conduit par un mouvement de la broche de la machine-outil à un emplacement de mesure sur la machine-outil (4) pour effectuer une opération de mesure qui se distingue d'un logement de broche et **en ce que** le dispositif adaptateur peut être séparé de l'appareil de mesure.

10. Dispositif de mesure selon la revendication 9,
**caractérisé en ce que**
l'appareil de mesure (3) comprend un appareil de mesure par contact.

11. Dispositif de mesure selon la revendication 9 ou 10,
**caractérisé en ce que**
l'appareil de mesure (3) comprend un appareil de mesure sans contact.

12. Dispositif de mesure selon l'une des revendications précédentes,
**caractérisé par**
un étalon de calibrage (7) relié de manière amovible à l'appareil de mesure (3).

13. Dispositif de mesure selon l'une des revendications précédentes,
**caractérisé en ce que**
l'appareil de mesure (3) peut être séparé de l'étalon de calibrage (4), notamment après son positionnement à l'emplacement de mesure sur une machine-outil.

14. Dispositif de mesure selon l'une des revendications précédentes,
**caractérisé en ce que**
pour une opération de positionnement sur la machine-outil l'appareil de mesure (3) est prévu au moins en partie dans un étalon de calibrage (4).

15. Dispositif de mesure selon l'une des revendications précédentes,
**caractérisé en ce que**
l'étalon de calibrage (4) est cylindrique creux.

16. Dispositif de mesure selon l'une des revendications précédentes,
**caractérisé en ce que**
l'appareil de mesure (3) comporte un dispositif adaptateur (6) pour être installé sur une machine-outil.

17. Dispositif de mesure selon l'une des revendications précédentes,
**caractérisé en ce que**
l'appareil de mesure (3) possède une surface d'appui pour être installé sur un plateau porte-outil d'une machine-outil.

18. Dispositif de mesure selon l'une des revendications précédentes,
**caractérisé en ce que**
le dispositif (4) est conçu pour être logé dans un magasin à outils usuel.

19. Dispositif de mesure selon l'une des revendications précédentes,
**caractérisé en ce que**
le dispositif (4) comporte un logement d'outil pour recevoir une broche d'outil.

20. Dispositif de mesure selon l'une des revendications précédentes,
**caractérisé en ce que**
l'appareil de mesure (3) est réalisé pour pouvoir être activé par sa séparation par rapport à l'étalon de calibrage.

21. Dispositif de mesure selon l'une des revendications précédentes,
**caractérisé en ce que**
l'appareil de mesure (3) est conçu pour pouvoir être activé par le positionnement sur la machine-outil.

22. Dispositif de mesure selon l'une des revendications précédentes,
**caractérisé en ce que**
l'appareil de mesure (3) est mis dans un état activé par palpage avec un étalon de calibrage.

23. Dispositif de mesure selon l'une des revendications précédentes,
**caractérisé en ce que**
l'appareil de mesure (3) peut être activé et/ou désactivé par des signaux infrarouges ou des signaux radio.
